# EUROPÄISCHE PATENTSCHRIFT

(11) **EP 0 837 252 B1**
(45) Veröffentlichungstag und Bekanntmachung des Hinweises auf die Patenterteilung: **25.04.2001**
(21) Anmeldenummer: 97112927.5
(22) Anmeldetag: 28.07.1997
(51) Int. Cl.: F16B 5/06, F16B 21/06, F16B 21/08

(54) **Befestigungselement**
Fastening element
Elément de fixation

(30) Priorität: 23.09.1996 DE 19638934
(43) Veröffentlichungstag der Anmeldung: 22.04.1998
(73) Patentinhaber: SIKA AG, 8048 Zürich (CH)
(72) Erfinder: Rimkus, Ralph, 3090 Overijse (BE)
(74) Vertreter: Wolf, Eckhard, Dr.-Ing.

(56) Entgegenhaltungen:
- GB-A- 2 168 419
- US-A- 4 019 764
- US-A- 4 850 773

## Beschreibung

Die Erfindung betrifft ein Befestigungselement zur Befestigung eines Bauteiles an einem Trägerteil nach dem Oberbegriff des Anspruchs 1.

Aus der US-A-4 019 764 ist ein Verbindungselement zum Zusammenklemmen von plattenförmigem Flachmaterial bekannt, welches zwei U-förmige Teilstücke aufweist, die mit ihren Schenkeln die breitseitig aneinanderliegenden Platten im Randbereich eines Durchbruchs umgreifen. Die U-Stücke sind dabei über ein Filmgelenk eines Verbindungsstreifens scharnierartig miteinander verbunden. Bei diesem Verbindungselement besteht jedoch die Gefahr, daß es beim Eindrücken in die Verriegelungsstellung vor allem durch am Rand der Ausnehmung vorhandene Stanz- bzw. Bohrgrate beschädigt werden kann. Insbesondere drücken die Schenkel bei einem Übermaß der Plattendicke gegen die Randkanten der Ausnehmung an.

Der Erfindung liegt daher die Aufgabe zugrunde, ein Befestigungselement der eingangs erwähnten Art anzugeben, welches die vorstehend genannten Nachteile vermeidet und eine zuverlässige Befestigung auch dann ermöglicht, wenn die Geometrie der jeweiligen Ausnehmung in dem Trägerteil in bezug auf das jeweilige Befestigungselement nicht genau übereinstimmt.

Diese Aufgabe wird durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, daß das Befestigungselement einen vorderen klipsartigen Teilbereich aufweist, der U-förmig ausgebildet und um eine entsprechende Achse nach außen schwenkbar ist. Die Schwenkbewegung erfolgt dadurch, daß der äußere Schenkel des U-förmigen Teilbereichs gegen die dem zu befestigenden Bauteil zugewandte Seite des Trägerteils gedrückt wird. Der innere Schenkel des U-förmigen Teilbereichs, der sich zunächst in der Ausnehmung des Trägerteiles befindet, wird durch die Ausnehmung hindurch nach außen geschwenkt. In der Verriegelungsstellung wird der innere Schenkel dann gegen die dem Befestigungselement abgewandte Fläche des Trägerteiles gedrückt, so daß der sich an die Ausnehmung anschließende randseitige Bereich des Trägerteiles zwischen den Schenkeln des U-förmigen Teilbereiches angeordnet ist.

Gemäß der Erfindung ist vorgesehen, daß die außenseitigen Schenkel des U-förmigen Teilbereiches des Befestigungselementes einen zum Trägerteil hin gerichteten nasenförmigen Vorsprung aufweisen, der sich in einem vorgegebenen Abstand von der Ausnehmung des Trägerteiles an diesem abstützt. Dabei ist die Höhe des nasenförmigen Vorsprunges derart gewählt, daß eventuelle an dem Rand der Ausnehmung in Richtung des zu befestigenden Bauteiles befindliche Grate den außenseitigen Schenkel nicht berühren und damit auch nicht beschädigen können.

Bei einer weiteren Ausführungsform der Erfindung ist vorgesehen, daß der jeweilige U-förmige Teilbereich des Befestigungselementes mit mindestens einer Rastnase versehen ist, die in der Verriegelungsstellung des Befestigungselementes in eine entsprechende, an dem Befestigungselement angeordnete Aufnahme eingreift und den U-förmigen Teilbereich in der Verriegelungsstellung in der nach außen geschwenkten Stellung hält.

Das Befestigungselement kann je nach Verwendung und geforderter Stabilität aus Kunststoff, Gummi oder aus Metall bestehen.

Das erfindungsgemäße Befestigungselement weist unter anderem den Vorteil auf, daß es zur Befestigung von Bauteilen an Trägerteilen unterschiedlicher Wandstärke geeignet ist. Außerdem ist die rückseitige Überhöhung des Trägerteiles nach Verriegelung des Befestigungselementes gering und liegt zwischen 0,3 und maximal 5 mm.

Weitere Einzelheiten und Vorteile der Erfindung ergeben sich aus den folgenden anhand von Figuren erläuterten Ausführungsbeispielen. Es zeigen:
- Fig. 1: die Seitenansicht eines ersten Ausführungsbeispieles eines erfindungsgemäßen Befestigungselementes mit U-förmig ausgebildeten vorderen klipsartigen Teilbereich vor der Befestigung an einem Trägerteil;
- Fig.2: die Fig.1 entsprechende Ansicht nach Befestigung des Befestigungselementes an dem Trägerteil;
- Fig.3 und 4: die den Fig.1 und 2 entsprechenden Ansichten eines zweiten Ausführungsbeispieles eines erfindungsgemäßen Befestigungselementes vor und nach Befestigung an einem Trägerteil.

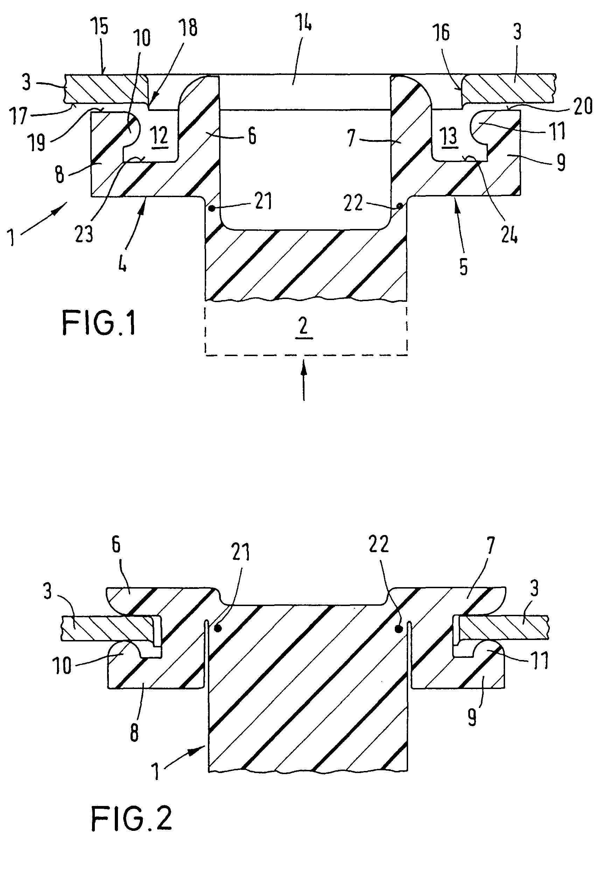

In Fig.1 ist mit 1 ein z.B. aus Kunststoff bestehendes Befestigungselement bezeichnet, mit dem ein nicht näher dargestelltes Bauteil 2 an einem z.B. aus Stahlblech bestehenden Trägerteil 3 befestigt werden soll. Das Befestigungselement 1 weist zwei U-förmig ausgebildete Teilbereiche 4, 5 auf, die jeweils einen inneren Schenkel 6, 7 und einen etwas kürzeren äußeren Schenkel 8, 9 aufweisen. Die äußeren Schenkel 8, 9 besitzen an ihren Enden jeweils einen nasenförmigen Vorsprung 10, 11, der sich in den Zwischenraum 12, 13 zwischen den Schenkeln 6, 8 bzw. 7, 9 erstreckt.

Das Trägerteil 3 besitzt eine z.B. quadratische Ausnehmung 14, die mittels eines Stanzwerkzeuges von der Oberseite 15 eingestanzt ist und im randseitigen Bereich 16 auf der Unterseite 17 einen relativ scharfen Grat 18 aufweist.

Zur Befestigung des Befestigungselementes 1 an dem Trägerteil 3 wird das entsprechende Bauteil 2 in Richtung auf das Trägerteil 3 hin verschoben. Dabei stößt das dem Trägerteil 3 zugewandte Ende 19, 20 des jeweiligen äußeren Schenkels 8, 9 gegen die Unterseite 17 des Trägerteiles 3. Wird das Bauteil 2 weiter nach oben gedrückt, so werden die U-förmigen Teilbereiche 4, 5 um die Drehachsen 21, 22 geschwenkt, und zwar derart, daß die inneren Schenkel 6, 7 nach außen geschwenkt und in ihren Endlagen gegen die Oberseite 15 des Trägerteiles 3 gedrückt werden (Fig.2). In dieser Lage drücken die nasenförmigen Vorsprünge 10, 11 der äußeren Schenkel 8, 9 jeweils gegen die Unterseite 17 des Trägerteiles 3, und zwar außerhalb des Grates 18.

Die Höhe der nasenförmigen Vorsprünge 10, 11 ist jeweils derart gewählt, daß der Grat 18 den Boden 23, 24 der jeweiligen Zwischenräume 12, 13 (Fig.2) nicht berührt und daher das Befestigungselement 1 nicht beschädigen kann.

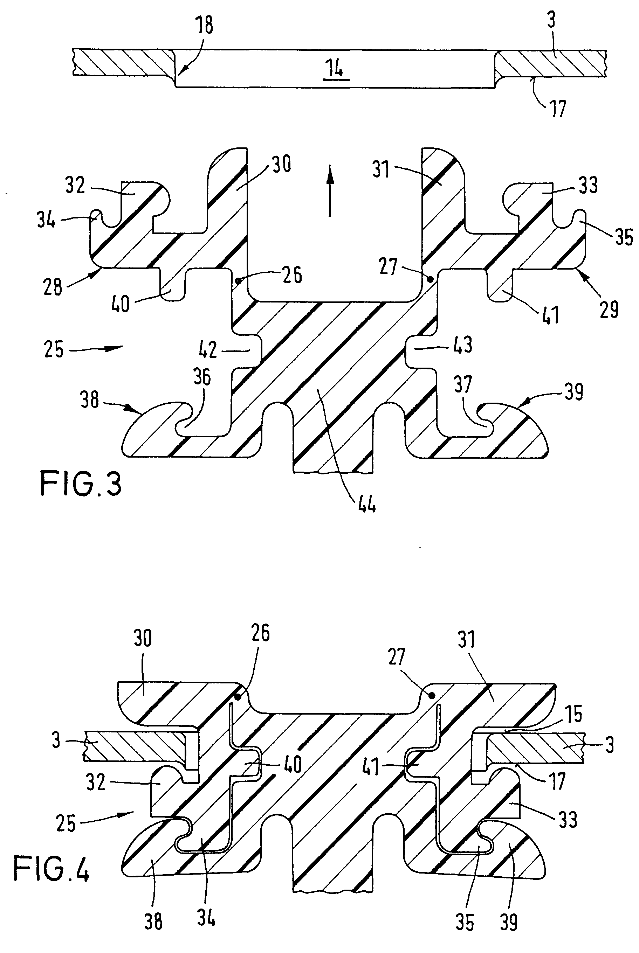

Die Fig.3 und 4 zeigen ein weiteres Ausführungsbeispiel eines erfindungsgemäßen mit 25 bezeichneten Befestigungselementes. Auch dieses Befestigungselement weist vorderseitig zwei um entsprechende Drehachsen 26, 27 schwenkbare Teilbereiche 28, 29 auf, die jeweils wiederum im wesentlichen U-förmig ausgebildet sind und innere sowie äußere Schenkel 30-33 besitzen. Außerdem sind an den Teilbereichen 28, 29 zwei Rastnasen 34, 35 angeordnet, die in der Verriegelungsstellung des Befestigungselementes 25 in entsprechende mit Hinterschneidungen 36, 37 versehene Aufnahmen 38, 39 eingreifen (Fig.4).

Um das Befestigungselement in seiner Verriegelungsstellung vor allem gegen axiale Zugkräfte zu sichern, hat es sich als vorteilhaft erwiesen, an den schwenkbaren Teilbereichen 28, 29 auf der den Schenkeln 30-33 abgewandten Seite nasenförmige Erhebungen 40, 41 vorzusehen, die in der Verriegelungsstellung in entsprechende Ausnehmungen 42, 43 des Grundkörpers 44 des Befestigungselementes 25 formschlüssig eingreifen.

Die Erfindung ist selbstverständlich nicht auf die vorstehend beschriebenen Ausführungsbeispiele beschränkt. So braucht beispielsweise das Befestigungselement nicht an dem einen Ende eines zu befestigenden Bauteiles angeordnet zu sein, sondern es kann sich auch um ein Befestigungsclips handeln, mit dem zwei mit entsprechenden Ausnehmungen versehenen Bleche etc. verbunden werden (in diesem Fall ist das eine Blech das Trägerteil und das zweite Blech das zu befestigende Bauteil). Ferner müssen die schwenkbaren Bereiche des Befestigungselementes nicht aus dem gleichen Material bestehen, wie der Grundkörper des Befestigungselementes (mehrstückiges Befestigungselement). Außerdem muß das Befestigungselement nicht zwangsläufig mit nur zwei schwenkbaren Bereichen versehen sein, sondern es können in Abhängigkeit der Ausnehmung des Trägerteiles (Dreiecksloch, Quadratloch etc.) auch drei, vier oder mehrere schwenkbare Bereiche vorgesehen sein. Sofern es sich bei der Ausnehmung des Trägerteiles um ein Rundloch (z.B. eine Bohrung) handelt, genügt auch lediglich ein einziger umfangseitig zusammenhängender schwenkbarer Bereich.

### Bezugszeichenliste

- 1: Befestigungselement
- 2: Bauteil
- 3: Trägerteil
- 4,5: schwenkbarer Teilbereich, U-förmiger Teilbereich
- 6,7: innere Schenkel, Teilbereich
- 8,9: äußere Schenkel
- 10,11: nasenförmige Vorsprünge
- 12,13: Zwischenräume
- 14: Ausnehmung
- 15: Oberseite
- 16: randseitige Bereich
- 17: Unterseite
- 18: Grat
- 19,20: Enden (äußere Schenkel)
- 21,22: Drehachsen
- 23,24: Boden der Zwischenräume

- 25: Befestigungselement
- 26,27: Drehachsen
- 28,29: Schwenkbare Teilbereiche, U-förmige Teilbereiche
- 30,31: innere Schenkel, Teilbereich
- 32,33: äußere Schenkel
- 34,35: Rastnasen
- 36,37: Hinterschneidungen
- 38,39: Aufnahmen
- 40,41: nasenförmige Erhebungen
- 42,43: Ausnehmungen
- 44: Grundkörper

## Patentansprüche

1. Befestigungselement zur Befestigung eines Bauteiles (2) an einem Trägerteil (3), wobei mindestens ein Teilbereich (6, 7; 30, 31) des Befestigungselementes (1; 25) durch eine Ausnehmung (14) des Trägerteiles (3) hindurchführbar ist, der mit dem Trägerteil (3) zu verbindende Teilbereich (4, 5; 28, 29) des Befestigungselementes (1; 25) U-förmig ausgebildet ist, derart, daß vor dem Befestigen des Befestigungselementes (1; 25) an dem Trägerteils (3), d.h. in der Ausgangsstellung des Befestigungselementes, der innere Schenkel (6, 7; 30, 31) des U-förmigen Teilbereiches (4, 5; 28, 29) durch die Ausnehmung (14) des Trägerteiles (3) hindurchführbar und der äußere Schenkel (8, 9; 32, 33) gegen die dem Befestigungselement (1; 25) zugewandte Seite (17) des Trägerteiles (3) drückbar ist, und der U-förmig ausgebildete Teilbereich (4, 5; 28, 29) des Befestigungselementes (1; 25) scharnierartig schwenkbar ist, derart, daß bei dem Befestigungsvorgang durch Druck des äußeren Schenkels (8, 9; 32, 33) gegen das Trägerteil (3) der innere Schenkel (6, 7; 30, 31) des U-förmigen Teilbereiches (4, 5; 28, 29) nach außen geschwenkt wird, bis er an der dem Befestigungselement (1; 25) abgewandten Seite (15) des Trägerteiles (3) anliegt, so daß der sich an die Ausnehmung (14) anschließende randseitige Bereich (16) des Trägerteiles (3) zwischen den Schenkeln (6-9; 30-33) des U-förmigen Teilbereiches (4, 5; 28, 29) angeordnet ist, und das Befestigungselement in der Verriegelungsstellung ist, **dadurch gekennzeichnet**, daß die außenseitigen Schenkel (8, 9; 32, 33) des U-förmigen Teilbereiches (4, 5; 28, 29) einen - in der Verriegelungsstellung - zum Trägerteil (3) hin gerichteten nasenförmigen Vorsprung (10, 11) aufweisen, der sich in einem vorgegebenen Abstand von der Ausnehmung (14) des Trägerteiles (3) an diesem abstützt.

2. Befestigungselement nach Anspruch 1, **dadurch gekennzeichnet**, daß die Höhe des jeweiligen nasenförmigen Vorsprungs (10,11) derart gewählt ist, daß eventuelle an dem randseitigen Bereich (16) der Ausnehmung (14) in Richtung des zu befestigenden Bauteiles (2) befindliche Grate (18) das Befestigungsteil (1;25) nicht berühren.

3. Befestigungselement nach Anspruch 1 oder 2, **dadurch gekennzeichnet**, daß der jeweilige U-förmige Teilbereich (28, 29) des Befestigungselementes (25) mit mindestens einer Rastnase (34, 35) versehen ist, die in der Verriegelungsstellung des Befestigungselementes (25) in eine entsprechende, an dem Befestigungselement (25) angeordnete Aufnahme (38, 39) eingreift und den U-förmigen Teilbereich (28, 29) sichert.

4. Befestigungselement nach einem der Ansprüche 1 bis 3, **dadurch gekennzeichnet**, daß die äußeren Schenkel (8, 9; 32, 33) des U-förmigen Teilbereiches des Befestigungselementes kürzer sind als die inneren Schenkel (6, 7; 30, 31).

5. Befestigungselement nach einem der Ansprüche 1 bis 4, **dadurch gekennzeichnet**, daß die Breite der inneren Schenkel zwischen 0,3 und 5 mm liegt.

6. Befestigungselement nach einem der Ansprüche 1 bis 5, **dadurch gekennzeichnet**, daß an den schwenkbaren Teilbereichen (28, 29) auf der den Schenkeln (30 - 33) abgewandten Seite nasenförmige Erhebungen (40, 41) vorgesehen sind, die in der Verriegelungsstellung in entsprechende Ausnehmungen (42, 43) des Grundkörpers (44) des Befestigungselementes (25) formschlüssig eingreifen.

7. Befestigungselement nach einem der Ansprüche 1 bis 6, **dadurch gekennzeichnet**, daß das Befestigungselement (1; 25) aus Kunststoff, Gummi oder Metall besteht.

8. Befestigungselement nach einem der Ansprüche 1 bis 7, **dadurch gekennzeichnet**, daß der Grundkörper (44) des Befestigungselementes (1; 25) und die schwenkbaren Teilbereiche (4, 5; 28, 29) einstückig ausgebildet sind.

## Claims

1. A fastening element for attaching a component to a support part (3), wherein at least one sub-region (6, 7; 30, 31) of the fastening element (1; 25) can be passed through a recess (14) of the support part (3), the sub-region (4, 5; 28, 29) of the fastening element (1; 25) to be connected to the support part (3) has a U-shaped configuration in such a manner that prior to fastening the fastening element (1; 25) to the support part (3), i.e. in the initial position of the fastening element, the inner leg (6, 7; 30, 31) of the U-shaped sub-region (4, 5; 28, 29) can be passed through the recess (14) of the support part (3) and the outer leg (8, 9; 32, 33) can be pressed against the side (17) of the support part (3) which is faced towards the fastening element (1; 25), and the U-shaped sub-region (4, 5; 28, 29) of the fastening element (1; 25) can swivel in the manner of a hinge in such a manner that, during the fastening operation, by pressing the outer leg (8, 9; 32, 33) against the support part (3) the inner leg (6, 7; 30, 31) of the U-shaped sub-region (4, 5; 28, 29) is swivelled outwards until it abuts the side (15) of the support part (3) faced away from the fastening element (1; 25), so that the edge-side region (16) of the support part (3) which is adjacent to the recess (14) is disposed between the legs (6-9; 30-33) of the U-shaped sub-region (4, 5; 28, 29), and the fastening element is in the locking position,
**characterised in that** the exterior legs (8, 9; 32, 33) of the U-shaped sub-region (4, 5; 28, 29) comprise a nose-shaped projection (10, 11) directed - in the locking position - towards the support part (3), which projection at a predetermined distance from the recess (14) of the support part (3) is supported on said support part.

2. A fastening element according to Claim 1,
**characterised in that** the height of the respective nose-shaped projection (10, 11) is chosen in such a manner that any burrs (18) located on the edge-side region (16) of the recess (14) in the direction of/towards the component (2) to be fastened do not touch the fastening part (1; 25).

3. A fastening element according to Claim 1 or 2,
**characterised in that** the respective U-shaped sub-region (28, 29) of the fastening element (25) is provided with at least one snap-in lug (34, 35), which in the locking position of the fastening element (25) engages in a corresponding seat (38, 39) disposed on the fastening element (25) and secures the U-shaped sub-region (28, 29).

4. A fastening element according to one of Claims 1 to 3,
**characterised in that** the outer legs (8, 9; 32, 33) of the U-shaped sub-region of the fastening element are shorter than the inner legs (6, 7; 30, 31).

5. A fastening element according to one of Claims 1 to 4,
**characterised in that** the width of the inner legs lies between 0.3 and 5 mm.

6. A fastening element according to one of Claims 1 to 5,
**characterised in that** provided on the swivelling sub-regions (28, 20) on the side faced away from the legs (30-33) are nose-shaped raised portions (40, 41), which in the locking position engage with form-fit in corresponding recesses (42, 43) of the basic member (44) of the fastening element (25).

7. A fastening element according to one of Claims 1 to 6,
**characterised in that** the fastening element (1; 25) is made from plastic material, rubber or metal.

8. A fastening element according to one of Claims 1 to 7,
**characterised in that** the basic member (44) of the fastening element (1; 25) and the swivelling sub-regions (4, 5; 28, 29) are constructed in one piece.

## Revendications

1. Elément de fixation pour fixer une partie structurelle (2) à une partie de support (3), au moins une région partielle (6, 7 ; 30, 31) de l'élément de fixation (1 ; 25) pouvant être engagée à travers un évidement (14) de la partie de support (3) ; la région partielle (4, 5 ; 28, 29) de l'élément de fixation (1 ; 25), devant être reliée à la partie de support (3), étant réalisée avec configuration en U de telle sorte que, préalablement à la fixation dudit élément de fixation (1 ; 25) à ladite partie de support (3), c'est-à-dire dans la position initiale dudit élément de fixation, la branche intérieure (6, 7 ; 30, 31) de la région partielle (4, 5 ; 28, 29) en U puisse être engagée à travers l'évidement (14) de la partie de support (3), et la branche extérieure (8, 9 ; 32, 33) puisse être pressée contre la face (17) de la partie de support (3) qui est tournée vers l'élément de fixation (1 ; 25) ; et la région partielle (4, 5 ; 28, 29) de l'élément de fixation (1 ; 25), configurée en U, pouvant pivoter à la manière d'une charnière de telle sorte que, lors du processus de fixation, la branche intérieure (6, 7 ; 30, 31) de la région partielle (4, 5 ; 28, 29) en U soit animée d'un pivotement vers l'extérieur, par pression de la branche extérieure (8, 9 ; 32, 33) contre la partie de support (3), jusqu'à ce qu'elle soit appliquée contre la face (15) de ladite partie de support (3) qui est tournée à l'opposé dudit élément de fixation (1 ; 25), si bien que la région marginale (16) de la partie de support (3), attenante à l'évidement (14), est située entre les branches (6-9 ; 30-33) de la région partielle (4, 5 ; 28, 29) en U, et l'élément de fixation occupe la position de verrouillage, caractérisé par le fait que les branches extérieures (8, 9 ; 32, 33) de la région partielle (4, 5 ; 28, 29) en U présentent une saillie (10, 11) en forme de mentonnet qui est dirigée vers la partie de support (3) - dans la position de verrouillage -, et qui prend appui contre ladite partie de support (3) à une distance préétablie par rapport à l'évidement (14) de cette dernière.

2. Elément de fixation selon la revendication 1, caractérisé par le fait que la hauteur de la saillie respective (10, 11) en forme de mentonnet est choisie de façon telle que d'éventuelles arêtes (18), situées dans la région marginale (16) de l'évidement (14) dans la direction de la partie structurelle (2) à fixer, ne touchent pas la partie de fixation (1 ; 25).

3. Elément de fixation selon la revendication 1 ou 2, caractérisé par le fait que la région partielle respective (28, 29) dudit élément de fixation (25), configurée en U, est munie d'au moins un bec encliquetable (34, 35) qui, dans la position de verrouillage de l'élément de fixation (25), pénètre dans un logement correspondant (38, 39) situé sur ledit élément de fixation (25), et arrête la région partielle (28, 29) en U.

4. Elément de fixation selon l'une des revendications 1 à 3, caractérisé par le fait que les branches extérieures (8, 9 ; 32, 33) de la région partielle en U dudit élément de fixation sont plus courtes que les branches intérieures (6, 7 ; 30, 31).

5. Elément de fixation selon l'une des revendications 1 à 4, caractérisé par le fait que la largeur des branches intérieures est comprise entre 0,3 et 5 mm.

6. Elément de fixation selon l'une des revendications 1 à 5, caractérisé par le fait que des protubérances (40, 41) en forme de mentonnets, prévues sur les régions partielles pivotantes (28, 29) du côté tourné à l'opposé des branches (30-33), pénètrent par concordance de formes, dans la position de verrouillage, dans des évidements correspondants (42, 43) du corps de base (44) de l'élément de fixation (25).

7. Elément de fixation selon l'une des revendications 1 à 6, caractérisé par le fait que ledit élément de fixation (1 ; 25) consiste en une matière plastique, en du caoutchouc ou en un métal.

8. Elément de fixation selon l'une des revendications 1 à 7, caractérisé par le fait que le corps de base (44) dudit élément de fixation (1 ; 25), et les régions partielles pivotantes (4, 5 ; 28, 29), sont réalisés d'une seule pièce.
